# EUROPÄISCHE PATENTANMELDUNG

(11) **EP 2 468 910 A1**
(43) Veröffentlichungstag der Anmeldung: **27.06.2012**
(21) Anmeldenummer: 11190075.9
(22) Anmeldetag: 22.11.2011
(51) Int. Cl.: C22C 38/38, F16B 1/00

(54) **Befestigungsanker, insbesondere für mineralische Untergründe und Beton**

(30) Priorität: 21.12.2010 DE 102010063684
(71) Anmelder: HILTI Aktiengesellschaft, 9494 Schaan (LI)
(72) Erfinder: Oberndorfer, Georg, 6800 Feldkirch (AT); Pol, Frederic, 6800 Feldkirch (AT)

(57) **Zusammenfassung**

Ein Befestigungsanker, insbesondere für mineralische Untergründe und Beton, ist dadurch gekennzeichnet, dass er aus einer nichtrostenden, nickelarmen Stahllegierung besteht.

## Beschreibung

Die Erfindung betrifft einen Befestigungsanker, wie er zur Befestigung von Bauteilen in oder an mineralischen Untergründen und Beton verwendet wird.

Da Beton und andere mineralische Untergründe aufgrund der in ihnen enthaltenen Elemente mäßig- bis mittelkorrosiv sind, ist es erforderlich, dass der Befestigungsanker aus korrosionsbeständigem Material besteht. Üblicherweise werden in diesen Fällen, bei denen der Befestigungsanker einer niedrigen bis mäßigen Belastung durch Chloride und Schwefeldioxide ausgesetzt ist, nichtrostende Stähle verwendet, die alle einen vergleichsweise hohen Nickel-Anteil im Bereich von 6,0 bis 14,5 Gew.-% aufweisen. Bei den weiteren Legierungsbestandteilen handelt es sich insbesondere um Chrom (16,5 bis 19,5 Gew.-%), Molybdän (0 bis 5,0 Gew.-%, insbesondere bis maximal 2,5 Gew.-%), Nickel (maximal 0,2 Gew.-%) und Mangan (maximal 2,0 Gew.-%). Beispiele für Stähle mit einer solchen Legierung sind die Stähle 1.4301, 1.4401, 1.4404 und 1.4571.

Nachteilig an den bekannten Befestigungsankers ist der hohe Anteil von Nickel in der Legierung. Aufgrund der geringen Verfügbarkeit von Nickel ergeben sich relativ hohe Herstellungskosten. Ein weiterer Nachteil ist die eher geringe Festigkeit dieser Legierungen im lösungsgeglühten Zustand: Die Zugfestigkeit Rm liegt meist nur im Bereich von 450 bis 800 MPa, vorzugsweise im Bereich von 500 bis 700 MPa, und als Untergrenze für die Streckgrenze Rp 0,2 ist von 175 MPa auszugehen.

Die Aufgabe der Erfindung besteht darin, einen Befestigungsanker zu schaffen, der sich durch geringere Herstellungskosten und höhere Leistung auszeichnet.

Zur Lösung dieser Aufgabe ist erfindungsgemäß vorgesehen, dass der Befestigungsanker aus einer nichtrostenden, nickelarmen Stahllegierung besteht. Durch die Verringerung des Nickel-Anteils in der Legierung lassen sich die Herstellungskosten senken. Gleichzeitig sind die Voraussetzungen für eine hohe Zugfestigkeit geschaffen.

Vorzugsweise ist vorgesehen, dass der Nickel-Anteil in der Legierung unterhalb von 3 % liegt, insbesondere unterhalb von 1,7 % und besonders bevorzugt unterhalb von 0,05 %. In diesem Fall kann bereits von einer Nickel-freien Legierung gesprochen werden.

Gemäß einer bevorzugten Ausführungsform ist vorgesehen, dass der Mangan-Anteil in der Legierung oberhalb von 4 % liegt, vorzugsweise oberhalb von 5 % und insbesondere oberhalb von 8 %. Der vergleichsweise hohe Mangan-Anteil in der Legierung wirkt sich vorteilhaft auf die Zähigkeit aus.

Vorzugsweise ist vorgesehen, dass die Legierung eine Zugfestigkeit Rm von mindestens 750 MPa aufweist, insbesondere von mehr als 850 MPa. Dies führt zu einer hohen Belastbarkeit des Befestigungsankers.

Vorzugsweise ist weiterhin vorgesehen, dass die Legierung eine Elastizitätsgrenze Rp von mindestens 530 MPa aufweist. Auf diese Weise ergibt sich eine hohe Sicherheit gegen Versagen des Befestigungsankers.

Die Erfindung wird nachfolgend anhand zweier Ausführungsformen beschrieben.

In einem ersten Ausführungsbeispiel besteht der Befestigungsanker aus austenitischferritischem, nichtrostendem Stahl 1.4162 (Duplex). Dieses Material enthält die folgenden Bestandteile:
Cr: 21,5 Gew.-%
Ni: 1,5 Gew.-%
Mo:0,3 Gew.-%
N: 0,23 Gew.-%
Mn:5,0 Gew.-%
C: 0,03 Gew.-%
Si: 0,70 Gew.-%

Mit diesem Material ergibt sich eine Zugfestigkeit Rm im Bereich von 750 bis 850 MPa sowie eine Elastizitätsgrenze Rp von oberhalb 530 MPa.

In einem zweiten Ausführungsbeispiel wird für den Befestigungsanker ein austenitischer nichtrostender Stahl mit der Bezeichnung P558 von Böhler Edelstahl verwendet. Dieses Material enthält die folgenden Bestandteile:
Cr: 17,25 Gew.-%
Mo:3,3 Gew.-%
Mn:10,5 Gew.-%
Ni: < 0,05 Gew.-%
N: 0,53 Gew.-%
C: 0,20 Gew.-%
Si: 0,45 Gew.-%

Mit diesem Material ergibt sich eine Zugfestigkeit Rm in der Größenordnung von 900 MPa und eine Elastizitätsgrenze Rp im Bereich von 530 MPa. Eine Wärmebehandlung ist nicht nötig; die gewünschten Festigkeitswerte ergeben sich allein durch die Kaltverfestigung beim Umformen. Außerdem lässt sich durch den Verzicht auf eine Wärmebehandlung eine bessere Beständigkeit gegen Spannungsrisskorrosion und Lochfraßkorrosion erzielen.

Die beschriebenen Legierungen sind für alle Arten von Befestigungsankern geeignet, beispielsweise für nach dem Formschluss- oder Kraftschlussprinzip arbeitende Ankersysteme, Gewindestangen, Schraubanker oder Befestigungsschrauben, die in Dübel eingeschraubt werden.

## Patentansprüche

1. Befestigungsanker, insbesondere für mineralische Untergründe und Beton, **dadurch gekennzeichnet, dass** er aus einer nichtrostenden, nickelarmen Stahllegierung besteht.

2. Befestigungsanker nach Anspruch 1, **dadurch gekennzeichnet, dass** der Nickel-Anteil in der Legierung unterhalb von 3 % liegt.

3. Befestigungsanker nach Anspruch 2, **dadurch gekennzeichnet, dass** der Nickel-Anteil unterhalb von 1,7 % liegt.

4. Befestigungsanker nach Anspruch 3, **dadurch gekennzeichnet, dass** der Nickel-Anteil unterhalb von 0,05 % liegt.

5. Befestigungsanker nach einem der vorhergehenden Ansprüche, **dadurch gekennzeichnet, dass** der Mangan-Anteil in der Legierung oberhalb von 4 % liegt.

6. Befestigungsanker nach Anspruch 5, **dadurch gekennzeichnet, dass** der Mangan-Anteil oberhalb von 5 % liegt.

7. Befestigungsanker nach Anspruch 6, **dadurch gekennzeichnet, dass** der Mangan-Anteil oberhalb von 8 % liegt, insbesondere bei rund 10 %.

8. Befestigungsanker nach einem der vorhergehenden Ansprüche, **dadurch gekennzeichnet, dass** die Legierung eine Zugfestigkeit Rm von mindestens 750 MPa aufweist.

9. Befestigungsanker nach Anspruch 8, **dadurch gekennzeichnet, dass** die Zugfestigkeit Rm oberhalb von 850 MPa liegt.

10. Befestigungsanker nach einem der vorhergehenden Ansprüche, **dadurch gekennzeichnet, dass** die Legierung eine Elastizitätsgrenze Rp von mindestens 530 MPa aufweist.
